# EUROPÄISCHE PATENTSCHRIFT

(11) **EP 0 836 346 B1**
(45) Veröffentlichungstag und Bekanntmachung des Hinweises auf die Patenterteilung: **28.02.2007**
(21) Anmeldenummer: 97114892.9
(22) Anmeldetag: 27.08.1997
(51) Int. Cl.: H04Q 11/04

(54) **Datenstromkonvertierungseinrichtung**
Datat stream conversion device
Dispositif de conversion d'un flux de données

(30) Priorität: 11.09.1996 DE 19636950
(43) Veröffentlichungstag der Anmeldung: 15.04.1998
(73) Patentinhaber: Infineon Technologies AG, 81669 München (DE)
(72) Erfinder: Alger-Meunier, Michael, 85540 Haar (DE); Dosch, Stefan, 85622 Feldkirchen (DE)
(74) Vertreter: Jannig, Peter

(56) Entgegenhaltungen:
- EP-A- 0 616 482
- EP-A- 0 691 796
- WO-A-96/27241
- US-A- 4 965 795
- "ISDN ORIENTED MODULAR (IOM) ARCHITECTURE - SECOND GENERATION ISDN ICS, IOM-2 INTERFACE" ICS FOR COMMUNICATIONS, SIEMENS AG, 1989, Seite 68 XP002018364

## Beschreibung

Die vorliegende Erfindung betrifft eine Datenstrom- , konvertierungseinrichtung gemäß dem Oberbegriff des Patentanspruchs 1, d.h. eine Datenstromkonvertierungseinrichtung für ein abschnittsweise wechselnd verschiedenartige Typen von Datenströmen übertragendes Telekommunikationssystem.

Eine derartige Datenstromkonvertierungseinrichtung ist beispielsweise in einer sogenannten NT-Einheit (Network-Termination-Einheit) eines ISDN-Telekommunikationssystems enthalten. Die in der Regel noch beim ISDN-Teilnehmer installierte NT-Einheit bildet eine Telekommunikationsnetz-Abschlußeinheit bzw. die Schnittstelle zwischen den Einrichtungen des ISDN-Betreibers (Vermittlungsämter, Leitungsnetz, etc.) und den Einrichtungen des ISDN-Teilnehmers (Telekommunikationsendeinrichtungen wie beispielsweise Telefon, Telefax etc.).

Die NT-Einheit ist in der Lage, von einem Vermittlungsamt bzw. einer sogenannten LT-Einheit (Line-Termination-Einheit) des ISDN-Betreibers über das Leitungsnetz desselben, welches bei ISDN-Systemen als sogenannte U-Schnittstelle (U-Interface) ausgebildet ist, (U-)Daten zu empfangen, diese hinsichtlich des Formats umzusetzen und gegebenenfalls in sonstiger Weise zu bearbeiten und schließlich als (S-)Daten über eine S-Schnittstelle (S-Interface) zu den ISDN-Teilnehmereinrichtungen auszugeben. Umgekehrt können auf dem selben Weg auch Daten von den ISDN-Teilnehmereinrichtungen zu den ISDN-Betreibereinrichtungen (und von dort weiter zu anderen Teilnehmern) übertragen werden.

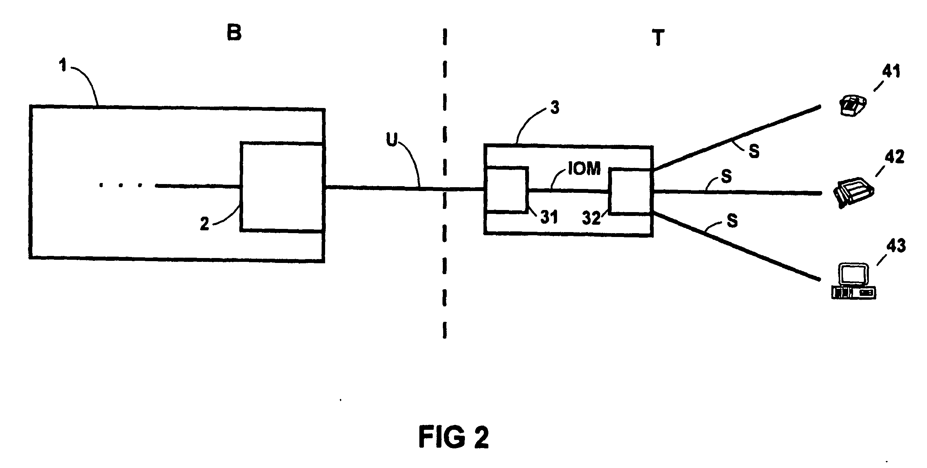

Eine schematische Darstellung zur Veranschaulichung des soeben in Worten beschriebenen Sachverhalts ist in der Figur 2 gezeigt.

Das in der Figur 2 gezeigte System besteht aus einem mit B bezeichneten (links dargestellten) ISDN-Betreiberabschnitt und einem mit T bezeichneten (rechts dargestellten) ISDN-Teilnehmerabschnitt.

Zum ISDN-Betreiberabschnitt B gehört ein Vermittlungsamt 1, welches nach außen hin durch eine LT-Einheit 2 abgeschlossen ist. Das Vermittlungsamt 1 ist über ein mit U bezeichnetes Leitungsnetz (U-Interface) mit dem ISDN-Teilnehmerabschnitt T, genauer gesagt mit einer dort vorgesehenen NT-Einheit 3 verbunden. Die NT-Einheit 3 ist über jeweils mit S bezeichnete Anschlußleitungen (S-Interfaces) mit einer Reihe von Telekommunikationsendeinrichtungen verbunden. Die besagten Telekommunikationsendeinrichtungen sind im betrachteten Beispiel ein Telefon 41, ein Faksimilegerät 42 und ein Computer 43.

Die NT-Einheit 3 enthält einen in der Figur 2 links dargestellten, nachfolgend der Einfachheit halber als U-Teil bezeichneten U-seitigen Abschnitt 31 und einen in der Figur 3 rechts dargestellten, nachfolgend der Einfachheit halber als S-Teil bezeichneten S-seitigen Abschnitt 32. U-seitig ankommende (U-)Daten (Datenpakete) werden durch den U-Teil 31 in ein sogenanntes IOM-Format umgesetzt, und die daraus resultierenden (IOM-)Daten (Datenpakete) werden ihrerseits - gegebenenfalls nach einer zwischenzeitichen Verarbeitung derselben - durch den S-Teil 32 in ein S-Format umgesetzt. Umgekehrt werden S-seitig ankommende (S-)Daten (Datenpakete) durch den S-Teil 32 in das IOM-Format umgesetzt, und die daraus resultierenden (IOM-)Daten (Datenpakete) werden ihrerseits - gegebenenfalls nach einer zwischenzeitichen Verarbeitung derselben - durch den U-Teil 31 in das U-Format umgesetzt.

Wie den vorstehenden Erläuterungen entnehmbar ist, stellt die NT-Einheit 3 eine bidirektional Datenströme konvertierende Datenstromkonvertierungseinrichtung dar, welche mit dem U-Teil 31 und dem S-Teil 32 zwei zwar zusammenwirkende, aber nichtsdestotrotz im wesentlichen unabhängig voneinander arbeitende Datenstromkonvertierungseinheiten aufweist.

Datenstromkonvertierungseinheiten nach Art des U-Teils 31 und/oder des S-Teils 32 können auch außerhalb von NT-Einheiten zum Einsatz kommen, beispielsweise in Schnittstellenkarten, (PCMCIA-)Adaptern oder dergleichen (nachfolgend der Einfachheit halber "nur" als Schnittstellenkarten bezeichnet) für Computer zum Anschluß derselben als bzw. wie Telekommunikationsendeinrichtungen ans ISDN.

Der Anschluß eines Computers an ein Telekommunikationsnetz wie beispielsweise das ISDN oder dergleichen ermöglicht es diesem, mit anderen Computern, Datenterminals, Faxgeräten und dergleichen in Verbindung zu treten bzw. Daten mit diesen auszutauschen. Ein derartiger Anschluß kann sich jedoch insbesondere im Fall von mobil einsetzbaren Geräten der genannten Art, d.h. insbesondere im Fall von Laptop-Computern und dergleichen als kompliziert und aufwendig erweisen. Bedauerlicherweise existieren nämlich selbst im Fall von weitgehend identischen Typen von Telekommunikationsnetzen verschiedene Typen von Telekommunikationsnetzabschlüssen, welche eine individuelle Anpassung der Schnittstellenkarte an dieselben erforderlich machen. So ist beispielsweise ein Computer in Europa über eine S-Schnittstelle, also über eine NT-Einheit ans ISDN anzuschließen, wohingegen in den USA der Anschluß ans ISDN über eine U-Schnittstelle, also gerade nicht über eine NT-Einheit der eingangs beschriebenen Art oder dergleichen zu erfolgen hat.

Will man einen Computer beispielsweise abwechselnd in Europa und in den USA am ISDN betreiben, so erfordert dies den Einsatz von zwei verschiedenen Schnittstellenkarten, welche bei wechselnden Einsatzorten jeweils auszutauschen sind. Dies ist erkennbar mit Unannehmlichkeiten verbunden, deren Vermeidung eine große Erleichterung darstellen würde.

Eine weitere Datenstromkonvertierungseinrichtung gemäß dem Oberbegriff des Patentanspruchs 1 ist aus der WO 96127241 A bekannt. Dieser Druckschrift sind jedoch keine Anregungen zur Lösung der vorstehend erwähnten Probleme entnehmbar.

Der vorliegenden Erfindung liegt daher die Aufgabe zugrunde, eine Datenstromkonvertierungseinrichtung gemäß dem Oberbegriff des Patentanspruchs 1 derart weiterzubilden, daß damit auf äußerst einfache Weise ermöglicht wird, Computer oder dergleichen schnell und einfach an verschiedene Typen von Telekommunikationsnetzabschlüssen anzuschließen.

Diese Aufgabe wird erfindungsgemäß durch die im kennzeichnenden Teil des Patentanspruchs 1 beanspruchten Merkmale gelöst.

Demnach ist vorgesehen, daß die Datenstromkonvertierungseinrichtung selektiv in eine von mehreren Betriebsarten versetzbar ist, wobei sie in einer ersten der Betriebsarten zum Einsatz in einer Telekommunkationsnetz-Abschlußeinheit zum Anschluß von Telekommunikationsendeinrichtungen ausgelegt ist, und wobei sie in einer zweiten der Betriebsarten zum Anschluß als Telekommunikationsendeinrichtung an Telekommunkationsnetz-Abschlußeinheiten ausgelegt ist.

Die erfindungsgemäße Datenstromkonvertierungseinrichtung ist dadurch im Fall eines ISDN-Systems sowohl als wesentliche Komponente einer NT-Einheit als auch als wesentliche Komponente in einer besonders vorteilhaften Schnittstellenkarte für einen Computer zum Anschluß desselben als bzw. wie eine Telekommunikationsendeinrichtung ans ISDN einsetzbar.

Die besonderen Vorteile, die eine eine erfindungsgemäße Datenstromkonvertierungseinrichtung enthaltende Schnittstellenkarte aufweist, sind neben deren Anschließbarkeit als Telekommunikationsendeinrichtung an das Telekommunikationsnetz insbesondere deren relativ elegant und einfach realisierbare Anschließbarkeit an verschiedenartige Telekommunikationsnetzabschlüsse.

Die zuletzt genannte Eigenschaft der erfindungsgemäßen Schnittstellenkarte, d.h. deren Anschließbarkeit an verschiedenartige Telekommunikationsnetzabschlüsse läßt sich bei Verwendung der erfindungsgemäßen Datenstromkonvertierungseinrichtung insbesondere deshalb sehr elegant und einfach erreichen, weil in Telekommunikationsnetz-Abschlußeinheiten einsetzbare Datenstromkonvertierungseinrichtungen aufgrund der naturgemäß bidirektional durchzuführenden Datenstromkonvertierungen zwei separate, weitgehend unabhängig voneinander arbeitende Datenstromkonvertierungseinheiten aufweisen, so daß
- an einer zentralen Stelle innerhalb der Datenstromkonvertierungseinrichtung eingegebene Daten alternativ oder gleichzeitig durch die zwei separaten Datenstromkonvertierungseinheiten in zwei verschiedenartige Typen von Datenströmen umsetzbar und als solche über separate Anschlüsse ausgebbar sind, und
- an der besagten zentralen Stelle innerhalb der Datenstromkonvertierungseinrichtung Daten empfangbar sind, die alternativ oder gleichzeitig über die separaten Anschlüsse als verschiedenartige Typen von Datenströmen in die zwei Datenstromkonvertierungseinheiten eingegeben und von diesen in Datenströme vom selben Typ umgesetzt wurden.

Die besagten (von Haus aus vorhandenen) mehreren Anschlüsse der Datenstromkonvertierungseinrichtung zum Ausgeben und Empfangen von verschiedenartig ausgebildeten Datenströmen ermöglichen es auf besonders einfache und elegante Weise, daß ein eine Schnittstellenkarte mit einer erfindungsgemäß ausgebildeten Datenstromkonvertierungseinrichtung verwendender Computer wahlweise oder gleichzeitig über verschiedene Telekommunikationsnetzabschlüsse mit einem oder mehreren Telekommunikationsnetzen verbindbar ist.

Speziell für den Fall eines ISDN-Systems bedeutet dies, daß die die erfindungsgemäße Datenstromkonvertierungseinrichtung enthaltende Schnittstellenkarte den Anschluß des Computers sowohl an eine S-Schnittstelle (also an eine NT-Einheit) als auch an eine U-Schnittstelle (also gerade nicht an eine NT-Einheit oder dergleichen) ermöglicht.

Es wurde also eine Datenstromkonvertierungseinrichtung gefunden, durch welche es auf äußerst einfache Weise ermöglicht wird, Computer oder dergleichen schnell und einfach an verschiedene Typen von Telekommunikationsnetzabschlüssen anzuschließen.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1: schematisch den Aufbau der erfindungsgemäßen Datenstromkonvertierungseinrichtung und deren Anbindung an einen als bzw. wie eine Telekommunikationsendeinrichtung ans ISDN anzuschließenden Computer, und
- Figur 2: schematisch den Aufbau eines ISDN-Systems mit einer eine herkömmlichen Datenstromkonvertierungseinrichtung enthaltenden NT-Einheit.

Die Erfindung wird nachfolgend speziell unter Bezugnahme von in ISDN-Systemen verwendbaren Datenstromkonvertierungseinrichtungen beschrieben. Die erfindungsgemäße Datenstromkonvertierungseinrichtung ist jedoch grundsätzlich auch in beliebigen anderen Telekommunikationssystemen einsetzbar.

Wenngleich dies allgemein bekannt sein dürfte, sei der Vollständigkeit halber erwähnt, daß im ISDN B-Kanäle zur Nutzdatenübertragung und D-Kanäle zur Paketdaten- und Signalisierungsdatentibertragung vorgesehen sind, und daß B-Kanal-Daten und D-Kanal-Daten miteinander verschachtelt bzw. vermischt und zusammen mit weiteren Steuerinformationen in Einheiten von Datenpaketen (Datenrahmen) als Datenstrom über das Leitungsnetz und die Verbindungsleitungen übertragen werden. Beim sogenannten ISDN-Basisanschluß sind es pro Teilnehmeranschluß zwei B-Kanäle und ein D-Kanal, die vorgesehen und auf die erwähnte Art und Weise behandelt werden.

Die in der Beschreibung verwendeten Bezeichnungen für die einzelnen ISDN-Schnittstellen sind die hierfür jeweils gebräuchlichen Bezeichnungen. Sofern gleichwohl Zweifel über deren jeweilige Bedeutung bestehen sollten, wird insbesondere auf die entsprechenden Definitionen in den ETSI- und ANSI-Normen verwiesen. Entsprechendes gilt für die nach den jeweiligen Schnittstellen benannten Daten(paket)format-Bezeichnungen.

Die verwendeten Schnittstellen-Bezeichnungen stellen umfassende Oberbegriffe dar, die jeweils sämtliche darunter subsumierbare Schnittstellen-Ausführungen umfassen mögen. So seien, um nur einige Beispiele zu nennen, unter anderem die Uk- und Uk0-Schnittstellen durch den allgemeinen Oberbegriff U-Schnittstelle, die S0-Schnittstelle durch den allgemeinen Oberbegriff S-Schnittstelle und die IOM-2-Schnittstelle durch den allgemeinen Oberbegriff IOM-Schnittstelle umfaßt. Entsprechendes gilt auch hier für die nach den jeweiligen Schnittstellen benannten Daten(paket)format-Bezeichnungen.

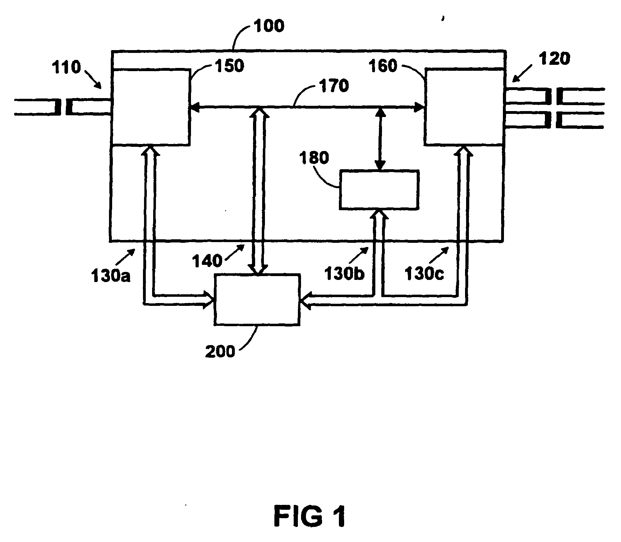

Ein Ausführungsbeispiel der erfindungsgemäßen Datenstromkonvertierungseinrichtung ist in der Figur 1 als ein mit dem Bezugszeichen 100 gekennzeichneter Block dargestellt.

Die Datenstromkonvertierungseinrichtung 100 ist im in der Figur 1 gezeigten Beispiel eine Schnittstellenkarte, PCMCIA-Adapter oder dergleichen (oder ein Teil derselben) zum Anschluß eines Computers oder dergleichen ans ISDN. Sie weist als von außen zugängliche Ahschlußmöglichkeiten (Schnittstellen) einen ersten Anschluß 110, einen 'zweiten Anschluß 120, dritte Anschlüsse 130a, 130b, 130c sowie einen vierten Anschluß 140 auf.

Der erste Anschluß 110 dient zum Anschluß an eine U-Schnittstelle des ISDN-Systems, der zweite Anschluß 120 zum Anschluß an eine S-Schnittstelle des ISDN-Systems, und die dritten und vierten Anschlüsse 130a, 130b, 130c und 140 zur Verbindung mit einem über den ersten Anschluß 110 und/oder den zweiten Anschluß 120 als bzw. wie eine Telekommunikationsendeinrichtung ans ISDN anzuschließenden Computer 200 oder dergleichen. Wenngleich dies in der Figur 1 nicht explizit dargestellt ist, erfolgt der Anschluß des Computers 200 an die Datenstromkonvertierungseinrichtung 100, genauer gesagt deren Anschlüsse 130a, 130b, 130c und 140 über eine im Computer 200 integrierte oder getrennt von diesem (z.B. auf der Schnittstellenkarte) vorgesehene Kommunikationssteuereinrichtung, welche gegebenenfalls ihrerseits wiederum von einem Mikroprozessor oder dergleichen gesteuert werden kann. Obgleich dies nicht die beste Lösung darstellen muß, wird im betrachteten Ausführungsbeispiel der Einfachheit halber davon ausgegangen, daß die besagte Kommunikationssteuereinrichtung im Computer 200 integriert ist.

Der erste Anschluß 110 mündet in eine erste Datenstromkonvertierungseinheit in Form eines U-Teils 150 der Datenstromkonvertierungseinrichtung 100, der zweite Anschluß 120 mündet in eine zweite Datenstromkonvertierungseinheit in Form eines S-Teils 160 der Datenstromkonvertierungseinrichtung 100, die dritten Anschlüsse 130a, 130b und 130c sind mit dem U-Teil 150, dem S-Teil 160, und einer D-Kanal-Steuereinheit 180 verbunden, und der vierte Anschluß 140 ist mit einer den U-Teil 150 und den S-Teil 160 verbindenden IOM-Leitung 170 verbunden.

Im beschriebenen Beispiel werden über die IOM-Leitung 170, wie deren Bezeichnung schon andeutet, das IOM-Format aufweisende Daten oder Datenpakete transferiert. Hiervon wird auch bei den folgenden Erläuterungen ausgegangen. Nichtsdestotrotz besteht hierauf jedoch keine Einschränkung. Grundsätzlich können die über die IOM-Leitung 170 transferierten (die durch den U-Teil 150, den S-Teil 160 und die dritten und vierten Anschlüsse 130a, 130b, 130c und 140 eingeschleusten) Daten oder Datenpakete auch jedes beliebige andere Format aufweisen.

Die Datenstromkonvertierungseinrichtung 100, insbesondere deren U-Teil 150, deren S-Teil 160 und die diese Einheiten verbindende IOM-Leitung 170 sind derart ausgebildet, daß sie sowohl als Datenstromkonvertierungseinrichtung in der eingangs bereits erläuterten Telekommunikationsnetz-Abschlußeinheit in Form einer NT-Einheit oder dergleichen als auch in einer Schnittstellenkarte zum Anschluß eines Computers oder dergleichen über verschiedenartige Telekommunikationsnetz-Anschlußeinheiten ans ISDN verwendbar sind.

Diese von Haus aus nicht gegebene mehrfache Verwendbarkeit der Datenstromkonvertierungseinrichtung 100 ist durch Vorsehen mehrerer Betriebsarten erreichbar, in welche diese über die dritten Anschlüsse 130a, 130b, 130c je nach Einsatzzweck selektiv versetzbar ist.

In einer ersten der besagten Betriebsarten ist die Datenstromkonvertierungseinrichtung 100 wie die in der Figur 2 gezeigte herkömmliche Datenstromkonvertierungseinrichtung 3 als NT-Einheit einsetzbar; sie bewirkt dadurch physikalisch gesehen die Umsetzung von der 2-Draht-U-Schnittstelle auf die 4-Draht-S-Schnittstelle. In dieser Betriebsarteinstellung entspricht der U-Teil 150 der erfindungsgemäßen Datenstromkonvertierungseinrichtung 100 im wesentlichen dem U-Teil 31 der herkömmlichen Datenstromkonvertierungseinrichtung 3, der S-Teil 160 dem S-Teil 32 und die IOM-Leitung 170 der mit IOM bezeichneten Verbindungsleitung zwischen dem U-Teil 31 und dem S-Teil 32.

Im Betrieb der Datenstromkonvertierungseinrichtung 100 als NT-Einheit werden über den Anschluß 110 empfangene (U-)Daten (Datenpakete) durch den U-Teil 150 in das IOM-Format umgesetzt, und die daraus resultierenden (IOM-)Daten (Datenpakete) werden - nach deren Weiterleitung über die IOM-Leitung 170 zum S-Teil 160 und einer gegebenenfalls zwischenzeitlich stattfindenden Verarbeitung - durch den S-Teil 160 in das S-Format umgesetzt und über den Anschluß 120 an Telekommunikationsendeinrichtungen des ISDN-Teilnehmers ausgegeben. Umgekehrt werden über der Anschluß 120 von Telekommunikationsendeinrichtungen des ISDN-Teilnehmers empfangene (S-) Daten (Datenpakete) durch den S-Teil 160 in das IOM-Format umgesetzt, und die daraus resultierenden (IOM-)Daten (Datenpakete) werden - nach deren Weiterleitung über die IOM-Leitung 170 zum U-Teil 150 und einer gegebenenfalls zwischenzeitlich stattfindenden Verarbeitung - durch den U-Teil 150 in das U-Format umgesetzt und über den Anschluß 110 an das Leitungsnetz des ISDN-Betreibers ausgegeben.

In einer zweiten der besagten Betriebsarten der Datenstromkonvertierungseinrichtung 100 ist diese, wie vorstehend bereits erwähnt, wie in der Figur 1 gezeigt in einer Schnittstellenkarte zum Anschluß eines Computers oder dergleichen als bzw. wie eine Telekommunikationsendeinrichtung ans ISDN einsetzbar.

Der Anschluß der Schnittstellenkarte ans ISDN erfolgt wahlweise oder gleichzeitig über deren Anschlüsse 110 und 120, wobei der Anschluß 110 zum Anschluß an eine U-Schnittstelle und wobei der Anschluß 120 zum Anschluß an eine S-Schnittstelle, also an eine NT-Einheit oder dergleichen ausgelegt ist.

Die Verbindung der Schnittstellenkarte mit dem wie eine Telekommunikationsendeinrichtung ans ISDN anzuschließenden Computer erfolgt unabhängig davon, ob der Anschluß ans ISDN über eine U-Schnittstelle (Anschluß 110) oder eine S-Schnittstelle (Anschluß 120) zu erfolgen hat, über die Anschlüsse 130a, 130b, 130c und 140.

Die Anschlüsse 130a, 130b und 130c dienen zum Anschluß von Steuerleitungen, über welche zwischen dem Computer 200 (der Kommunikationssteuereinheit), dem U-Teil 150, dem S-Teil 160 und der D-Kanal-Steuereinheit 180 Steuersignale zur gegenseitigen Steuerung ausgetauscht werden.

Die noch nicht erläuterte D-Kanal-Steuereinheit 180 ist ein sogenannter HDLC-Controller und hat, wie der Name schon andeutet, die Funktion, über den D-Kanal des ISDN übertragene Daten zu verändern oder zu verarbeiten oder über den D-Kanal zu übertragende Daten zu erzeugen und in diesen einzuspeisen. Über den D-Kanal werden, wie vorstehend bereits erwähnt wurde, Paketdaten oder Signalisierungsdaten übertragen. Die D-Kanal-Steuereinheit 180 ist im betrachteten Beispiel vorgesehen, um für den Computer 200, welcher an sich ja keine ISDN-Telekommunikationsendeinrichtung darstellt, die Überwachung, die Auswertung, die Veränderung und/oder die Erzeugung von D-Kanal-Daten übernehmen zu können.

Über die besagten Steuerleitungen wird die Datenstromkonvertierungseinrichtung 100, genauer gesagt insbesondere deren U-Teil 150, deren S-Teil 160 und/oder deren D-Kanal-Steuereinheit 180 in einen Zustand versetzt, der es ermöglicht, die Datenstromkonvertierungseinrichtung 100 als Telekommunikationsendeinrichtung ans ISDN anzuschließen. Die technischen Voraussetzungen, die eine Einrichtung erfüllen muß, um als Telekommunikationsendeinrichtung ordnungsgemäß ans ISDN angeschlossen werden zu können, sind bekannt und bedürfen hier keiner näheren Erläuterung. Über die Steuerleitungen sind ferner zumindest der U-Teil 150 und/oder der S-Teil 160 je nach Bedarf selektiv aktivierbar und deaktivierbar.

Der Anschluß 140 repräsentiert ein IOM-ähnliches PCM-Interface und ist für Nutzdatentransfers zwischen dem Computer 200 und der Datenstromkonvertierungseinrichtung 100 vorgesehen. Die zu transferierenden Daten sind entweder vom Computer 200 stammende, über die Datenstromkonvertierungseinheit 100 ins ISDN zu versendende (in dessen B-Kanäle einzuspeisende) (Nutz-)Daten oder von der Datenstromkonvertierungseinrichtung 100 aus dem ISDN (dessen B-Kanälen) empfangene, für den Computer 200 bestimmte (Nutz-)Daten.

Die Datenleitung, über welche die Nutzdatentransfers zwischen der Datenstromkonvertierungseinrichtung 100 und dem Computer 200 erfolgen, ist eine PCM-Leitung, welche in die IOM-Leitung 170 mündet. Die IOM-Leitung 170 stellt im betrachteten Beispiel eine zentrale Stelle der Datenstromkonvertierungseinrichtung 100 dar, über welche (gleichzeitig oder alternativ) sowohl zwischen dem U-Teil 150 und dem Computer 200 als auch zwischen dem S-Teil 160 und dem Computer 200 ein Datenaustausch unter gleichzeitiger Konvertierung der Daten (Datenströme) in bestimmte Formate erfolgen kann.

In der besagten zweiten Betriebsart der erfindungsgemäßen Datenstromkonvertierungseinrichtung 100 werden vom Computer 200 ausgegebene (zu versendende) IOM-Daten von diesem über den Anschluß 140 in die Datenstromkonvertierungseinrichtung 100 eingegeben, dort über die besagte PCM-Leitung in die IOM-Leitung 170 eingespeist, über diese zum U-Teil 150 und/oder zum S-Teil 160 weitergeleitet, dort in U- und/oder S-Daten umgesetzt und über den Anschluß 110 (im Fall von U-Daten) und/oder 120 (im Fall von S-Daten) ausgegeben. Umgekehrt werden
- U-Daten, die über den Anschluß 110 empfangen wurden, durch den U-Teil 150 ins IOM-Format umgesetzt, auf die IOM-Leitung 170 ausgegeben und von dort über die PCM-Leitung und den Anschluß 140 zum Computer 200 weitergeleitet, und/oder
- S-Daten, die über den Anschluß 120 empfangen wurden, durch den S-Teil 160 ins IOM-Format umgesetzt, auf die IOM-Leitung 170 ausgegeben und von dort über die PCM-Leitung und den Anschluß 140 zum Computer 200 weitergeleitet.

Der Verwendung der erfindungsgemäßen Datenstromkonvertierungseinrichtung ist in zweierlei Hinsicht vorteilhaft. Einerseits ist sie je nach Betriebsarteinstellung wahlweise als Telekommunikations-Abschlußeinheit oder als Telekommunikations-Anschlußeinheit (zum ordnungsgemäßen Anschließen von Geräten ans Telekommunikationsnetz) verwendbar, und andererseits ermöglicht sie in ihrer Funktion als Telekommunikations-Anschlußeinheit den Anschluß an für verschiedenartige Datenformate ausgelegte Telekommunikationsnetz-Abschlußeinheiten..

Es wurde mithin eine Datenstromkonvertierungseinrichtung gefunden, die einerseits äußerst vielfältig und flexibel einsetzbar ist und andererseits auf äußerst einfache und elegante Weise den Anschluß von Computern an verschiedene Telekommunikationssysteme vereinheitlichen und erleichtern hilft.

## Patentansprüche

1. Datenstromkonvertierungseinrichtung (100) für ein abschnittsweise wechselnd verschiedenartige Typen von Datenströmen übertragendes ISDN-Telekommunikationssystem,wobei die Datenstromkonvertierungseinrichtung selektiv in eine von mehreren Betriebsarten versetzbar ist,
**dadurch gekennzeichnet,**
- **daß** sie in einer ersten der Betriebsarten zum Einsatz in einer NT-Einheit zum Anschluß von Telekommunikationsendeinrichtungen ausgelegt ist, und
- **daß** sie in einer zweiten der Betriebsarten zum Anschluß als Telekommunikationsendeinrichtung an eine NT-Einheit ausgelegt ist.

2. Datenstromkonvertierungseinrichtung nach Anspruch 1,
**dadurch gekennzeichnet,**
**daß** diese zwei in Reihe geschaltete Datenstromkonvertierungseinheiten (150, 160) umfaßt, wobei eine erste der Datenstromkonvertierungseinheiten (150) mit einem ersten externen Anschluß (110) der Datenstromkonvertierungseinrichtung (100) verbunden ist und wobei die zweite der Datenstromkonvertierungseinheiten (160) mit einem zweiten externen Anschluß (120) der Datenstromkonvertierungseinrichtung (100) verbunden ist.

3. Datenstromkonvertierungseinrichtung nach Anspruch 2,
**dadurch gekennzeichnet,**
**daß** die erste Datenstromkonvertierungseinheit (150), die zweite Datenstromkonvertierungseinheit (160) und/oder weitere Einheiten der Datenstromkonvertierungseinrichtung (100) von außen über einen dritten Anschluß (130a, 130b, 130c) der Datenstromkonvertierungseinrichtung (100) ansteuerbar sind.

4. Datenstromkonvertierungseinrichtung nach Anspruch 2 oder 3,
**dadurch gekennzeichnet,**
**daß** diese einen vierten Anschluß (140) aufweist, über welchen die Verbindungsleitung zwischen der ersten Datenstromkonvertierungseinheit (150) und der zweiten Datenstromkonvertierungseinheit (160) zur Nutzdatenübertragung mit einem als oder wie eine Telekommunikationsendeinrichtung ans Telekommunikationsnetz anzuschließenden Computer (200) verbindbar ist.

5. Datenstromkonvertierungseinrichtung nach Anspruch 3 oder 4,
**dadurch gekennzeichnet,**
**daß** diese über den dritten Anschluß (130a, 130b, 130c) derselben derart ansteuerbar ist, daß in der ersten der mehreren Betriebsarten
über den ersten Anschluß (110) der Datenstromkonvertierungseinrichtung (100) eingegebene, ein erstes Datenformat aufweisende Daten durch die erste Datenstromkonvertierungseinheit (150) in ein zweites Datenformat aufweisende Daten konvertiert werden und diese wiederum durch die zweite Datenstromkonvertierungseinheit (160) in ein drittes Datenformat aufweisende Daten konvertiert und als solche über den zweiten Anschluß (120) aus der Datenstromkonvertierungseinrichtung (100) ausgegeben werden, und
über den zweiten Anschluß (120) der Datenstromkonvertierungseinrichtung (100) eingegebene, ein drittes Datenformat aufweisende Daten durch die zweite Datenstromkonvertierungseinheit (160) in ein zweites Datenformat aufweisende Daten konvertiert werden und diese wiederum durch die erste Datenstromkonvertierungseinheit (150) in ein erstes Datenformat aufweisende Daten konvertiert und als solche über den ersten Anschluß (110) aus der Datenstromkonvertierungseinrichtung (100) ausgegeben werden.

6. Datenstromkonvertierungseinrichtung nach Anspruch 3 oder 4,
**dadurch gekennzeichnet,**
**daß** diese über den dritten Anschluß (130a, 130b, 130c) derselben derart ansteuerbar ist, daß in der zweiten der mehreren Betriebsarten
über den ersten Anschluß (110) der Datenstromkonvertierungseinrichtung (100) eingegebene, ein erstes Datenformat aufweisende Daten durch die erste Datenstromkonvertierungseinheit (150) in ein zweites Datenformat aufweisende Daten konvertiert und als solche über den vierten Anschluß (140) aus der Datenstromkonvertierungseinrichtung (100) zum Computer (200) ausgegeben werden,
über den zweiten Anschluß (120) der Datenstromkonvertierungseinrichtung (100) eingegebene, ein drittes Datenformat aufweisende Daten durch die zweite Datenstromkonvertierungseinheit (160) in ein zweites Datenformat aufweisende Daten konvertiert werden und als solche über den vierten Anschluß (140) aus der Datenstromkonvertierungseinrichtung (100) zum Computer (200) ausgegeben werden, und
vom Computer (200) in die Verbindungsleitung (170) zwischen der ersten Datenstromkonvertierungseinheit (150) und der zweiten Datenstromkonvertierungseinheit (160) eingeschleuste, ein zweites Datenformat aufweisende Daten durch die erste Datenstromkonvertierungseinheit (150) in ein erstes Datenformat aufweisende Daten konvertiert und als solche aus dem ersten Anschluß (110) der Datenstromkonvertierungseinrichtung (100) ausgegeben werden und/oder durch die zweite Datenstromkonvertierungseinheit (160) in ein drittes Datenformat aufweisende Daten konvertiert und als solche aus dem zweiten Anschluß (120) der Datenstromkonvertierungseinrichtung (100) ausgegeben werden.

7. Datenstromkonvertierungseinrichtung nach einem der vorhergehenden Ansprüche,
**dadurch gekennzeichnet,**
**daß** diese eine D-Kanal-Steuereinheit (180) aufweist, welche bei Bedarf dazu veranlaßbar ist, über das Telekommunikationsnetz übertragene bzw. zu übertragende Paket- und Signalisierungsdaten zu überwachen, auszuwerten, zu verändern und/oder zu erzeugen.

## Claims

1. Data stream conversion device (100) for an ISDN telecommunications system which transmits different types of data streams alternately section by section, in which the data stream conversion device can be changed selectively to one of a plurality of modes, **characterized**
- **in that** it is designed in a first of the modes for operation in an NT unit for the connection of telecommunications terminals, and
- **in that** it is designed in a second of the modes for connection as a telecommunications terminal to an NT unit.

2. Data stream conversion device according to Claim 1,
**characterized in that** said device comprises two series-connected data stream conversion units (150, 160), a first of the data stream conversion units (150) being connected to a first external connection (110) of the data stream conversion device (100), and the second of the data stream conversion units (160) being connected to a second external connection (120) of the data stream conversion device (100).

3. Data stream conversion device according to Claim 2,
**characterized in that** the first data stream conversion unit (150), the second data stream conversion unit (160) and/or further units of the data stream conversion device (100) can be driven from the outside via a third connection (130a, 130b, 130c) of the data stream conversion device (100).

4. Data stream conversion device according to Claim 2 or 3,
**characterized in that** said device has a fourth connection (14) via which the connecting line between the first data stream conversion unit (150) and the second data stream conversion unit (160) can be connected, for wanted data transmission, to a computer (200) which can be connected to the telecommunications network as or like a telecommunications terminal.

5. Data stream conversion device according to Claim 3 or 4, **characterized in that** said device can be driven via the third connection (130a, 130b, 130c) thereof in such a manner that, in the first of the plurality of modes
data which are entered via the first connection (110) of the data stream conversion device (100) and are in a first data format are converted by the first data stream conversion unit (150) into data in the second data format, and these data are in turn converted by the second data stream conversion unit (160) into data in a third data format and are output as such from the data stream conversion device (100) via the second connection (120), and
data which are entered via the second connection (120) of the data stream conversion device (100) and are in the third data format are converted by the second data stream conversion unit (160) into data in a second data format, and said data are in turn converted by the first data stream conversion unit (150) into data in a first data format, and are output as such from the data stream conversion device (100) via the first connection (110).

6. Data stream conversion device according to Claim 3 or 4, **characterized in that** said device can be driven via the third connection (130a, 130b, 130c) thereof in such a manner that, in the second of the plurality of modes,
data which are entered via the first connection (110) of the data stream conversion device (100) and are in a first data format are converted by the first data stream conversion unit (150) into data in a second data format and are output as such from the data stream conversion device (100) to the computer (200), via the fourth connection (140),
data which are entered via the second connection (120) of the data stream conversion device (100) and are in a third data format are converted by the second data stream conversion unit (160) into data in a second data format and are output as such from the data stream conversion device (100) to the computer (200), via the fourth connection (140), and
data which are introduced by the computer (200) into the connecting line (170) between the first data stream conversion unit (150) and the second data stream conversion unit (160) and are in a second data format are converted by the first data stream conversion unit (150) into data in a first data format and are output as such from the first connection (110) of the data stream conversion device (100), and/or are converted by the second data stream conversion unit (160) into data in a third data format and are output as such from the second connection (120) of the data stream conversion device (100).

7. Data stream conversion device according to one of the preceding claims,
**characterized in that** said device has a D-channel control unit (180) which, if required, can be caused to monitor, to evaluate, to modify and/or to produce packet and signaling data which are or can be transmitted via the telecommunications network.

## Revendications

1. Dispositif de conversion de flux de données (100) pour un système de télécommunication RNiS transmettant différents types de flux de données de manière alterinée par section, le dispositif de conversion de flux de données étant sélectivement transposable en un mode parmi plusieurs modes de fonctionnement, **caractérisé en ce que**
- il est interprété dans un premier des modes de fonctionnement pour la mise en oeuvre dans une unité NT pour le raccordement de dispositifs terminaux de télécommunication, et
- il est interprété dans un deuxième des modes de fonctionnement pour le raccordement à une unité NT en tant que dispositif terminal de télécommunication.

2. Dispositif de conversion de flux de données selon la revendication 1, **caractérisé en ce que**
celui-ci comporte deux unités de conversion de flux de données (150, 160) branchées en série, une première des unités de conversion de flux de données (150) étant reliée à un premier raccordement externe (110) du dispositif de conversion de flux de données (100) et la deuxième des unités de conversion de flux de données (160) étant reliée à un deuxième raccordement externe (120) du dispositif de conversion de flux de données (100).

3. Dispositif de conversion de flux de données selon la revendication 2, **caractérisé en ce que**
la première unité de conversion de flux de données (150), la deuxième unité de conversion de flux de données (160) et/ou d'autres unités du dispositif de conversion de flux de données (100) peuvent être commandées à partir de l'extérieur au moyen d'un troisième raccordement (130a, 130b, 130c) du dispositif de conversion de flux de données (100).

4. Dispositif de conversion de flux de données selon la revendication 2 ou 3, **caractérisé en ce que**
celui-ci comporte un quatrième raccordement (140) permettant de relier la ligne de liaison entre la première unité de conversion de flux de données (150) et la deuxième unité de conversion de flux de données (160) pour la transmission de données de service à un ordinateur (200) à raccorder en tant que ou comme un dispositif terminal de télécommunication au réseau de télécommunication.

5. Dispositif de conversion de flux de données selon la revendication 3 ou 4, **caractérisé en ce que**
celui-ci peut être commandé au moyen du troisième raccordement (130a, 130b, 130c) de celui-ci de telle sorte que dans le premier des multiples modes de fonctionnement,
des données présentant un premier format de données, introduites au moyen du premier raccordement (110) du dispositif de conversion de flux de données (100), sont converties par la première unité de conversion de flux de données (150) en données présentant un deuxième format de données et celles-ci sont à nouveau converties par la deuxième unité de conversion de flux de données (160) en données présentant un troisième format de données et celles-ci sont fournies sous cette forme en sortie du dispositif de conversion de flux de données (100) au moyen du deuxième raccordement (120), et
des données présentant un troisième format de données, introduites au moyen du deuxième raccordement (120) du dispositif de conversion de flux de données (100), sont converties par la deuxième unité de conversion de flux de données (160) en données présentant un deuxième format de données et celles-ci sont à nouveau converties par la première unité de conversion de flux de données (150) en données présentant un premier format de données et celles-ci sont fournies sous cette forme en sortie du dispositif de conversion de flux de données (100) au moyen du premier raccordement (110).

6. Dispositif de conversion de flux de données selon la revendication 3 ou 4, **caractérisé en ce que**
celui-ci peut être commandé au moyen du troisième raccordement (130a, 130b, 130c) de celui-ci de telle sorte que dans le deuxième des multiples modes de fonctionnement,
des données présentant un premier format de données, introduites au moyen du premier raccordement (110) du dispositif de conversion de flux de données (100), sont converties par la première unité de conversion de flux de données (150) en données présentant un deuxième format de données et celles-ci sont fournies à l'ordinateur (200) sous cette forme en sortie du dispositif de conversion de flux de données (100) au moyen du quatrième raccordement (140),
des données présentant un troisième format de données, introduites au moyen du deuxième raccordement (120) du dispositif de conversion de flux de données (100), sont converties par la deuxième unité de conversion de flux de données (160) en données présentant un deuxième format de données et celles-ci sont fournies à l'ordinateur (200) sous cette forme en sortie du dispositif de conversion de flux de données (100) au moyen du quatrième raccordement (140), et
des données présentant un deuxième format de données, enfermées dans la ligne de liaison (170) provenant de l'ordinateur (200) entre la première unité de conversion de flux de données (150) et la deuxième unité de conversion de flux de données (160), sont converties par la première unité de conversion de flux de données (150) en données présentant un premier format de données et celles-ci sont fournies sous cette forme en sortie du premier raccordement (110) du dispositif de conversion de flux de données (100) et/ou elles sont converties par la deuxième unité de conversion de flux de données (160) en données présentant un troisième format de données et celles-ci sont fournies sous cette forme en sortie du deuxième raccordement (120) du dispositif de conversion de flux de données (100).

7. Dispositif de conversion de flux de données selon une des revendications précédentes, **caractérisé en ce que** celui-ci comporte une unité de commande (180) à canal D qui peut être sollicitée si besoin est pour surveiller, exploiter, modifier et/ou générer des données de paquets et de signalisation transmises ou à transmettre sur le réseau de télécommunication.
